(19) Europäisches Patentamt / European Patent Office / Office européen des brevets

(11) **EP 3 516 842 B1**

(12) **EUROPÄISCHE PATENTSCHRIFT**

(45) Veröffentlichungstag und Bekanntmachung des Hinweises auf die Patenterteilung:
**14.09.2022 Patentblatt 2022/37**

(21) Anmeldenummer: **17768116.0**

(22) Anmeldetag: **15.09.2017**

(51) Internationale Patentklassifikation (IPC):
***H04L 9/08*** *(2006.01)*

(52) Gemeinsame Patentklassifikation (CPC):
**H04L 63/065; H04L 9/0833;** H04L 2463/061;
Y04S 40/20

(86) Internationale Anmeldenummer:
**PCT/EP2017/073228**

(87) Internationale Veröffentlichungsnummer:
**WO 2018/091167 (24.05.2018 Gazette 2018/21)**

(54) **VERFAHREN UND VORRICHTUNG ZUM ÜBERTRAGEN VON DATEN IN EINEM TOPIC-BASIERTEN PUBLISH-SUBSCRIBE-SYSTEM**

METHOD AND DEVICE FOR TRANSFERRING DATA IN A TOPIC-BASED PUBLISH-SUBSCRIBE SYSTEM

PROCÉDÉ ET DISPOSITIF DE TRANSMISSION DE DONNÉES DANS UN SYSTÈME DE PUBLICATION-ABONNEMENT À BASE DE SUJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2016 DE 102016222523**

(43) Veröffentlichungstag der Anmeldung:
**31.07.2019 Patentblatt 2019/31**

(73) Patentinhaber: **Siemens Aktiengesellschaft 80333 München (DE)**

(72) Erfinder:
• **FALK, Rainer**
  **85586 Poing (DE)**
• **FRIES, Steffen**
  **85598 Baldham (DE)**

(56) Entgegenhaltungen:
**WO-A2-2007/149850     US-B1- 6 363 154
US-B1- 7 234 058**

Processed by Luminess, 75001 PARIS (FR)

**Beschreibung**

Die vorliegende Erfindung betrifft ein Verfahren zum Übertragen von Daten in einem Topic-basierten Publish-Subscribe-System. Des Weiteren betrifft die vorliegende Erfindung eine Vorrichtung zum Übertragen von Daten in einem Topic-basierten Publish-Subscribe-System und ein solches Publish-Subscribe-System.

Mit der Öffnung von geschlossenen Systemen zu offenen IoT-Systemen (IoT; Internet-of-Things) ergeben sich Anforderungen für die Kommunikation in Industrienetzen, welche aus dem Telekommunikationsumfeld und dem öffentlichen Internet bekannt sind. Durch die zunehmende Dezentralisierung der Systeme befinden sich Komponenten auch hinter Firewall-Systemen und sind damit nicht direkt vom Internet erreichbar.

Hier kommen sogenannte Publish-Subscribe-Systeme zum Einsatz, die zum einen die Discovery-Phase, das heißt das Auffinden des Kommunikationspartners, aber auch den Aufbau einer Ende-zu-Ende-Kommunikationsbeziehung unterstützen. Publish-Subscribe-Systeme können auch als Publikations- und Subskription-Systeme bezeichnet werden. Bei Publish-Subscribe-Systemen kann sowohl die klassische Punkt-zu-Punkt-Kommunikation als auch eine Gruppenkommunikation zum Einsatz kommen, um auf eine möglichst effiziente Art eine Vielzahl von Systemen zu erreichen. Ein Beispiel hierfür ist ein Lastabwurf oder auch die Begrenzung der Stromeinspeisung in einem Smart-Grid-System.

Für die Ende-zu-Ende-Kommunikation besteht die Anforderung einer Ende-zu-Ende-Sicherheit. Dies gilt sowohl für die Punkt-zu-Punkt-Kommunikation als auch für die Gruppenkommunikation. Es besteht somit sowohl im Internet wie in IoT-Systemen als auch in industriellen Systemen ein Bedarf, eine Ende-zu-Ende-Sicherheit für eine Publish-Subscribe-Kommunikation bereitstellen zu können.

Bekannt sind Publish-Subscribe-Protokolle, bei welchen eine zentrale Instanz zur Registrierung von Knoten existiert und eine Adressauflösung durchführt. Beispiele sind aus dem Telekommunikationsbereich mit H.323 und SIP bekannt. Im industriellen Bereich findet das Protokoll OPC-UA Anwendung und im Smart Grid Umfeld wird das Protokoll XMPP integriert.

Im Fall des XMPP-Protokolls, welches derzeit hauptsächlich für Chat-Anwendungen genutzt wird, findet die Gruppenkommunikation über sogenannte Multi-User-Chatrooms (MUC) statt. Zugang zum MUC wird durch den Messaging-Server pro Knoten geprüft. XMPP unterstützt hierbei eine Authentisierung auf Applikationsschicht mittels des SASL-Protokolls. Die Authentisierung findet hierbei zwischen Client und Server statt. Ende-zu-Ende im Sinne der Applikation wird derzeit nur durch Anwendung von S/MIME unterstützt.

Ferner sind Schlüsselableitungen für paarweise Sicherheitsbeziehungen bekannt, wie sie beispielsweise in Protokollen wie TLS verwendet werden. Ferner sind Lösungen für die Aushandlung bei Messenger Clients bekannt, um einen kryptographischen Kontext zum Schutz der Kommunikation zu erstellen.

Zur Schlüsselableitung werden Schlüsselableitungsfunktionen eingesetzt. Beispiele hierfür sind HMAC-SHA256 und KDF2. Herkömmliche Ableitungsparameter, welche von einer solchen Schlüsselableitungsfunktion verwendet werden, sind der Identifier eines Knotens, eine Protokollversion oder ein Hop-Count, wie bei 3GPP SAE.

Des Weiteren kann für eine kommutative Schlüsselableitung eines Schlüssels auf Basis des Diffie-Hellman-Problems das Burmester-Desmedt Konferenz-Keying-Protokoll eingesetzt werden. Neben der Schlüsselaushandlung für Gruppen in dezentralen Systemen existieren weitere Schlüsselverteilmechanismen in Systemen mit einer zentralen Komponente. Beispiele hierfür sind Group Domain of Interpretation (GDOI, definiert in RFC 6407) und Group Security Association Management Protocol (GSAKMP, definiert in RFC 4535).

Bei diesen Protokollen erfolgt typischerweise eine Anmeldung an einem Schlüsselverteilserver, der nach erfolgreicher Authentisierung und Autorisierung der Knoten den Gruppenschlüssel an diese verteilt.

Zudem sind aus der US 7,234,058 B1 Gruppenschlüsselverwaltungstechniken bekannt, um paarweise Schlüssel für sichere Punkt-zu-Punkt-Kommunikationsanwendungen zu erzeugen. Knoten einer sicheren Kommunikationsgruppe empfangen jeweils einen Gruppenschlüssel und zugehörige Richtlinieninformationen. Wenn ein erster Knoten eine sichere Punkt-zu-Punkt-Verbindung zu einem zweiten Knoten aufbauen möchte, leitet der erste Knoten einen paarweisen Schlüssel aus dem Gruppenschlüssel und den Richtlinieninformationen ab, beispielsweise durch Hashing des Gruppenschlüssels und Informationen, welche die zwei Knoten identifizieren. Als Ergebnis wird ohne den Austausch von Verhandlungsnachrichten oder teuren asymmetrischen kryptographischen Berechnungsansätzen ein paarweiser Schlüssel erzeugt.

Die US 6,363,154 B1 offenbart den Versand sicherer Nachrichten zwischen Knoten einer Gruppe, welche mit einem Kommunikationsnetzwerk verbunden sind, indem ein zufälliger geheimer Schlüssel an einem ersten Knoten der Gruppe definiert wird. Dieser zufällige geheime Schlüssel wird von dem ersten der Gruppenknoten zu den verbleibenden Knoten der Gruppe gesendet. Eine Zufallszahl wird an einem zweiten Knoten der Gruppe erzeugt. Ein Einweg-Hash der Zufallszahl und des zufälligen geheimen Schlüssels wird an dem zweiten Knoten der Gruppe erzeugt, um einen Arbeitsschlüssel zu erzeugen. Eine Nachricht wird am zweiten Knoten der Gruppe mit dem Arbeitsschlüssel verschlüsselt. Die verschlüsselte Nachricht und die Zufallszahl werden von der zweiten der Gruppe von Knoten zu den verbleibenden der Gruppe von Knoten gesendet, wobei jeder der verbleibenden Knoten der Gruppe einen Einweg-Hash der Zufallszahl und des zufälligen geheimen Schlüssels durchführt, um den Arbeitsschlüssel zu regenerieren.

Die WO 2007/149850 A2 offenbart ein Sicherheitssystem für ein hierarchisches Netzwerk umfassend hierarchische Ebenen, von denen jede einer Sicherheitsdomänebene entspricht, und mehrere lokale Netzwerkknoten. Ein Schlüsselmaterialgenerator erzeugt dabei einen Satz von korreliertem Schlüsselmaterial für jeden Netzwerkknoten. Jeder Satz von Schlüsselmaterial besteht aus Untergruppen von Schlüsselmaterial, eines für jede Sicherheitsdomänenebene. Ein Einrichtungsserver verteilt die erzeugten Sätze von Verschlüsselungsmaterial an jeden Netzwerkknoten, um zu ermöglichen, dass die Netzwerkknoten miteinander in einer Sicherheitsdomäne einer hierarchischen Ebene durch Verwendung eines entsprechenden Untersatzes des Sicherheitsschlüsselmaterials kommunizieren.

Vor diesem Hintergrund besteht eine Aufgabe der vorliegenden Erfindung darin, die Übertragung von Daten in einem Topic-basierten Publish-Subscribe-System zu verbessern.

Gemäß einem ersten Aspekt wird ein Verfahren zum Übertragen von Daten in einem Topic-basierten Publish-Subscribe-System umfassend einen Schlüsselverteilserver und eine Anzahl von mit dem Schlüsselverteilserver koppelbaren lokalen Client-Systemen vorgeschlagen. Das Verfahren umfasst die folgenden Schritte:

a) Bereitstellen eines Gruppenschlüssels durch den Schlüsselverteilserver für eine Gruppe ausgewählt aus den lokalen Client-Systemen,
b) lokales Ableiten eines Untergruppenschlüssels erster Ordnung für eine Untergruppe erster Ordnung der Gruppe mittels Schlüsselableitungsparametern zumindest umfassend den bereitgestellten Gruppenschlüssel und ein bestimmtes Topic des Publish-Subscribe-Systems für das jeweilige Client-System der Untergruppe erster Ordnung, und
c) Übertragen zumindest einer unter Verwendung des abgeleiteten Untergruppenschlüssels erster Ordnung kryptographisch geschützten Nachricht zwischen den Client-Systemen der Untergruppe erster Ordnung.

Die Gruppe umfasst eine Teilmenge der mit dem Schlüsselverteilserver gekoppelten Client-Systeme. Die jeweilige Untergruppe erster Ordnung ist gebildet aus einer Teilmenge der Client-Systeme der Gruppe.

Der vorgeschlagene Ansatz ermöglicht eine Differenzierung innerhalb einer Gruppenkommunikation nach Topics, beispielsweise Themen oder Diensten, mittels spezifischer kryptographischer Schlüssel, hier der Untergruppenschlüssel erster Ordnung. Dabei kann die Schlüsselableitung nach den spezifischen Topics ohne ein weiteres Geheimnis von dem Gruppenschlüssel realisiert werden. Der Gruppenschlüssel kann auch als Basisgruppenschlüssel bezeichnet werden. Damit kann eine Nachricht, die potentiell einem falschen Topic zugeordnet wurde, beim Empfänger, dem entsprechenden lokalen Client-System, schon aufgrund einer fehlgeschlagenen Authentisierung der Nachricht erkannt werden.

Vorzugsweise kann auch ein weiteres Geheimnis für die jeweilige Untergruppe eingesetzt werden, so kann auch durchgesetzt werden, dass nur Mitglieder dieser Untergruppe mit vorgegebenen Gruppenzugehörigkeiten senden und empfangen können.

Wie oben bereits ausgeführt, ist das Topic des Publish-Subscribe-Systems beispielsweise eine Thema oder ein Dienst des Publish-Subscribe-Systems. Das Topic kann auch hierarchisch strukturiert sein, zum Beispiel mittels eines Topic-Baums, zum Beispiel Topic 1, Topic 2, Topic 3. Dabei kann die Schlüsselableitung auch insbesondere schrittweise entsprechend des Topic-Baums erfolgen. In dem Beispiel zuerst für Topic 1 als Ableitungsparameter, dann mit Topic 2 als Ableitungsparameter und dann mit Topic 3 als Ableitungsparameter.

Ein Schlüsselverteilserver kann in dem Publish-Subscribe-System als zentraler Schlüsselverteilserver angeordnet sein oder als dezentraler Schlüsselverteilserver auf einem Zwischenknoten in dem Publish-Subscribe-System ausgebildet sein. Hierbei kann also ein hierarchisches oder kaskadiertes System von Schlüsselverteilservern in dem Publish-Subscribe-System realisiert werden. Der zentrale Schlüsselverteilserver kann dabei den Gruppenschlüssel den Knoten der Gruppe bereitstellen, das heißt den Client-Systemen der Gruppe. Ein dezentraler Schlüsselverteilserver, das heißt ein Zwischenknoten der ein Client-System der Gruppe ist, kann den Gruppenschlüssel als zweckgebundenen Schlüssel einer zweiten Untergruppe bereitstellen. Dadurch ist das Missbrauchspotential des Gruppenschlüssels beschränkt. Der Ziel-Knoten, das heißt das jeweilige lokale Client-System, oder ein weiterer Zwischenknoten, der dem jeweiligen lokalen Client-System vorgeordnet ist, kann die weiteren Ableitungsschritte für die Ableitung des Untergruppenschlüssels erster Ordnung und gegebenenfalls von Untergruppenschlüsseln höherer Ordnung selbst vornehmen. Dadurch ist es insbesondere möglich, exponierten Feldgeräten als Beispiele für lokale Client-Systeme nur zweckgebunden Schlüssel flexibel bereitzustellen.

Insbesondere sind der Gruppenschlüssel und die von dem Gruppenschlüssel abgeleiteten Untergruppenschlüssel kryptographische Schlüssel. Dabei wird der abgeleitete Untergruppenschlüssel dazu verwendet, um eine Publish-Subscribe-Nachricht kryptographisch zu schützen. Dieses kryptographische Schützen der Publish-Subscribe-Nachricht oder Nachricht umfasst insbesondere Integritätsschutz, Authentizität und/oder Vertraulichkeit.

Das folgende Beispiel kann die Funktionalität des vorliegenden Ansatzes illustrieren. Als Topics können beispielsweise Namespaces genutzt werden, um die Gruppenkommunikation für ein bestimmtes Thema entsprechend aufzusetzen. Ein Beispiel hierfür sei ein virtuelles Kraftwerk (VPP; Virtual Power Plant) im Bereich München, welches eine separate Gruppe für die Kommunikation von Einspeisereduzierungen (reduce infeeds) besitzt:

*VPP.munich.reduce_infeed*

Hierbei kann ein dreistufiger Ansatz umgesetzt werden. Dabei wird für jede weitere Schachtelungstiefe ein weiterer Untergruppenschlüssel eingesetzt. Für diesen Ansatz können beispielhaft die beiden nachstehenden Realisierungsmöglichkeiten eingesetzt werden:

1. Die Zuordnung zu einer Untergruppe bedarf des entsprechenden Untergruppenschlüssels, der lokal von jedem Client-System der Untergruppe nach einer vorgegebenen Regel abgeleitet werden kann. Die vorgegebene Regel ist beispielsweise durch eine Schlüsselableitungsfunktion oder eine Schlüsselableitungsoperation ausgebildet. Dabei ist ein gemeinsames Geheimnis nur an den Gruppenschlüssel der Gruppe, demnach der höchsten Hierarchiestufe, gebunden. Alle weiteren Schlüssel, die Untergruppenschlüssel, können unter Nutzung des Topics von dem Gruppenschlüssel, auch als Hauptschlüssel bezeichnet, abgeleitet werden.

In dem folgenden Beispiel bezeichnet $K_{VPP}$ den Gruppenschlüssel, h die Schlüsselableitungsfunktion, group-secret das Geheimnis der Gruppe, "weitere Parameter" weitere Ableitungsparameter, munich bezeichnet die Untergruppe erster Ordnung der Gruppe VPP und reduce_infeed bezeichnet die Untergruppe zweiter Ordnung zu der Untergruppe erster Ordnung munich.

- $K_{VPP} = h(\text{group-secret, weitere Parameter})$
- $K_{munich} = h(K_{VPP}, \text{weitere Parameter})$
- $K_{reduce\_infeed} = h(K_{munich}, \text{weitere Parameter})$

Durch die Untergruppierung erhöht sich die direkte Erkennung der Zuordnung zu einer Kommunikationsgruppe. Der Verwendungszweck eines abgeleiteten Schlüssels ist auf ein vorhergesehenes Anwendungsgebiet gemäß dem verwendeten Topic beschränkt. Dabei ist der Verwendungszweck durch die Ableitungsparameter umfassend das Topic definiert.

2. Die Zuordnung zu einer jeder Hierarchiestufe bedarf eines entsprechenden zusätzlichen Geheimnisses, in dem untenstehenden Beispiel group-secret$_{munich}$ für die Untergruppe erster Ordnung munich und group-secret$_{reduce\_infeed}$ für die Untergruppe zweiter Ordnung reduce_infeed, welche sich als Teilmenge der Untergruppe erster Ordnung munich ergibt.

- $K_{VPP} = h(\text{group-secretvpp, weitere Parameter})$
- $K_{munich} = h(\text{group-secret}_{munich}, K_{VPP}, \text{weitere Parameter})$
- $K_{reduce\_infeed} = h(\text{group-secret}_{reduce\_infeed}, K_{munich}, \text{weitere Parameter})$

Die Verteilung der zusätzlichen Untergruppengeheimnisse group-secret$_{munich}$ und group-secret$_{reduce\ infeed}$ kann über den Schlüsselverteilserver erfolgen. Über die Ableitung wird sichergestellt, dass ein einzelner Untergruppenschlüssel nicht ausreicht, um eine Nachricht zu verifizieren oder zu generieren. Damit kann insbesondere sichergestellt werden, dass eine Einspeisereduktion reduce_infeed nur in einem bestimmten Gebiet erfolgen kann und dies über den verwendeten Schlüssel $K_{reduce\_infeed}$ auch sichergestellt ist.

Des Weiteren können bei der Schlüsselableitung auch richtungsbezogene Parameter mit eingehen (publish, subscribe). Damit lassen sich getrennte Schlüssel für die Publish-Kommunikation und für die Subscribe-Kommunikation realisieren. Über die bestimmten Schlüssel ist es dann auch vorteilhafterweise möglich, eine Sicherheitspolitik (Security Policy) zur erlaubten Kommunikation umzusetzen.

Gemäß einer Ausführungsform werden die Schritte a), b) und c) nach einer jeweiligen Authentisierung des Client-Systems der Gruppe an dem Schlüsselverteilserver durchgeführt.

Vorteilhafterweise wird der Gruppenschlüssel erst nach einer Authentisierung und damit verbunden Autorisierung der lokalen Client-Systeme durch den Schlüsselverteilserver an diese verteilt.

Erfindungsgemäß umfasst das Verfahren die folgenden Schritte:

lokales Ableiten eines Untergruppenschlüssels zweiter Ordnung für eine Untergruppe zweiter Ordnung der Untergruppe erster Ordnung mittels des abgeleiteten Untergruppenschlüssels erster Ordnung durch das jeweilige Client-System der Untergruppe zweiter Ordnung, und
Übertragen zumindest einer unter Verwendung des abgeleiteten Untergruppenschlüssels zweiter Ordnung kryptographisch geschützten Nachricht zwischen den Client-Systemen der Untergruppe zweiter Ordnung.

Durch die Untergruppe zweiter Ordnung und den entsprechenden Untergruppenschlüsseln zweiter Ordnung kann eine weitere Hierarchiestufe unter der Gruppe und der Untergruppe erster Ordnung geschaffen werden. Somit können die Nachrichten in dem Publish-Subscribe-System weiter differenziert verteilt werden.

Gemäß einer weiteren Ausführungsform wird der Untergruppenschlüssel erster Ordnung für die Untergruppe erster Ordnung mittels der Schlüsselableitungsparameter umfassend den bereitgestellten Gruppenschlüssel, das bestimmte Topic des Publish-Subscribe-Systems, ein für die Untergruppe erster Ordnung spezifisches Geheimnis und zumindest einen weiteren Ableitungsparameter abgeleitet.

Durch die Nutzung eines spezifischen Geheimnisses, welches für die Untergruppe spezifisch ist, kann sichergestellt werden, dass ein einzelner Untergruppenschlüssel nicht ausreicht, um eine Nachricht zu verifizieren oder zu generieren.

Gemäß einer weiteren Ausführungsform ist der weitere Ableitungsparameter ein Publish-Subscribe-System-basierter Parameter.

Gemäß einer weiteren Ausführungsform ist der weitere Ableitungsparameter für eine Kommunikationsrichtung innerhalb des Publish-Subscribe-Systems, für eine Schlüsselverwendung innerhalb des Publish-Subscribe-Systems und/oder für einen Gültigkeitszeitraum für den Untergruppenschlüssel erster Ordnung indikativ.

Wie oben bereits ausgeführt, können auch richtungsbezogene Ableitungsparameter oder Paramater in die Schlüsselableitung mit eingehen. Damit lassen sich beispielsweise getrennte Publish-Kommunikationen und Subscribe-Kommunikationen realisieren.

Des Weiteren ist es möglich, eine Rolle oder ein Security-Label eines Mandatory-Access-Control-Systems als Ableitungsparameter zu verwenden. Einem Topic wird eine Rolle oder ein Label zugeordnet. Dabei kann ein Domain-Type den Daten zugeordnet werden, wohingegen ein Role-Type beispielsweise einem lokalen Client-System zugeordnet wird. Des Weiteren kann als Ableitungsparameter ein Security-Label eines Topics zusätzlich zu dem Topic oder anstelle des Topics verwendet werden. Dies kann als eine Indirektion ausgebildet werden, bei welcher das Topic zuerst auf ein Label abgebildet wird und das Label als Ableitungsparameter für die Ableitungsfunktion verwendet wird.

Gemäß einer weiteren Ausführungsform wird der Untergruppenschlüssel erster Ordnung für die Untergruppe erster Ordnung mittels einer kommutativen Operation aus den Schlüsselableitungsparametern durch das jeweilige Client-System der Untergruppe erster Ordnung abgeleitet.

Gemäß einer weiteren Ausführungsform werden M in einer Hierarchie geordnete Untergruppen der Gruppe von Client-Systemen vorgesehen. Dabei wird ein Untergruppenschlüssel (N+1)-ter Ordnung einer Untergruppe (N+1)-ter Ordnung mittels eines Untergruppenschlüssels N-ter Ordnung einer Untergruppe N-ter Ordnung abgeleitet.

Die Operation ist insbesondere eine Schlüsselableitungsfunktion. Die kommutative Schlüsselableitungsfunktion ist eine Schlüsselableitung, bei der mehrere Schlüsselableitungsparameter eingehen, welche schrittweise angewendet werden können. Bei einer kommutativen Schlüsselableitungsfunktion sind die Ableitungsschritte der unterschiedlichen Ableitungsparameter vertauschbar, das heißt es gilt

$$KDF(KDF(K, P1), P2) = KDF(KDF(K, P2), P1),$$

wobei KDF die Schlüsselableitungsfunktion, K den Gruppenschlüssel, P1 einen ersten Parameter und P2 einen zweiten Parameter bezeichnen.

Gemäß einer weiteren Ausführungsform ist die Untergruppe N-ter Ordnung in der Hierarchie der M geordneten Untergruppen unmittelbar über der Untergruppe (N+1)-ter Ordnung angeordnet.

Gemäß einer weiteren Ausführungsform umfasst das Verfahren die folgenden Schritte:

lokales Ableiten eines Untergruppenschlüssels (N+1)-ter Ordnung für eine Untergruppe (N+1)-ter Ordnung der Untergruppe N-ter Ordnung mittels des ableiteten Untergruppenschlüssels N-ter Ordnung durch das jeweilige Client-System der Untergruppe (N+1)-ter Ordnung, mit N $\in$ [1, ..., M] und M > 2, und

Übertragen zumindest einer unter Verwendung des abgeleiteten Untergruppenschlüssels (N+1)-ter Ordnung kryptographisch geschützten Nachricht zwischen den Client-Systemen der Untergruppe (N+1)-ter Ordnung.

Diese Schritte können vorzugsweise iterativ für alle Untergruppen durchgeführt werden, so dass einer jeden Untergruppe der entsprechende Untergruppenschlüssel an einem jeden Client-System der jeweiligen Untergruppe bereitgestellt werden kann.

Gemäß einer weiteren Ausführungsform wird der Untergruppenschlüssel (N+1)-ter Ordnung für die Untergruppe (N+1)-ter Ordnung unter Verwendung des ableiteten Untergruppenschlüssels N-ter Ordnung und eines für die Untergruppe (N+1)-ter Ordnung spezifischen Geheimnisse durch das jeweilige Client-System der Untergruppe (N+1)-ter Ordnung abgeleitet.

Das spezifische Geheimnis schützt die jeweilige Untergruppe kryptographisch noch besser ab.

Gemäß einer weiteren Ausführungsform umfasst das lokale Client-System eine Anzahl von Client-Vorrichtungen. Die jeweilige Client-Vorrichtung ist insbesondere eine dezentrale Energieerzeugungseinrichtung zur Bereitstellung von elektrischer Energie in ein Energieversorgungsnetzwerk.

Gemäß einer weiteren Ausführungsform weist das Client-System eine Schlüsselableitungseinheit auf, mittels welcher der Untergruppenschlüssel für die Client-Vorrichtungen des Client-Systems abgeleitet wird.

Gemäß einer weiteren Ausführungsform wird das Client-System einer bestimmten Untergruppe von M in einer Hierarchie geordneten Untergruppen für die Gruppe von Client-Systemen zugeordnet, wobei der der bestimmten Untergruppe zugeordnete Untergruppenschlüssel für die Client-Vorrichtungen des Client-Systems mittels der Schlüsselableitungseinheit des Client-Systems abgeleitet wird.

Das folgende Beispiel gerichtet auf ein Publish-Subscribe-System für die Einspeisung elektrischer Energie in ein lokales Energieversorgungsnetz kann die Funktionalität des vorliegenden Ansatzes illustrieren. Das Publish-Subscribe-System umfasst einen Schlüsselverteilserver, welcher mit einer Anzahl von lokalen Client-Systemen, beispielsweise über das Internet oder ein Intranet, verbunden ist. Die lokalen Client-Systeme können lokale Energieerzeuger, lokale Energieverbraucher und Steuerkomponenten, wie virtuelle Operatoren, zur Steuerung der Energieeinspeisung und der Energieverteilung umfassen.

Das genutzte Kommunikationsprotokoll in dem Publish-Subscribe-System kann beispielsweise XMPP sein. Der Schlüsselverteilserver kann vorliegend auch als XMPP-Server bezeichnet werden und realisiert mitunter die Adressauflösung, um Erzeuger und Verbraucher für die Steuerkomponenten sichtbar und ansprechbar zu machen. Des Weiteren ermöglicht ein bei dem XMPP-Server eingerichteter Multi-User-Chatroom eine Gruppenkommunikation, so dass eine Steuerkomponente zum Beispiel einen Lastabwurfbefehl oder eine Verminderung der Einspeisung an alle angemeldeten Gruppenmitglieder schicken kann.

Gemäß dem Standard IEC61350-8-2 können sich alle XMPP-Clients über einen TLS geschützten Link an dem XMPP-Server anmelden und können hierzu ein lokal vorhandenes Zertifikat und den dazugehörigen privaten Schlüssel nutzen, um sich zu authentisieren. Zusätzlich kann eine Authentisierung an einem Multi-User-Chatroom des XMPP-Servers durchgeführt werden, um Zugang für die entsprechend autorisierten Chaträume zu bekommen. Entsprechend der möglichen verschiedenen Gruppen können verschiedene Chaträume eingerichtet werden, beispielsweise in Abhängigkeit bestimmter lokaler Ausdehnungen. Die verschiedenen Chaträume können beispielsweise für die Untergruppen erster Ordnung und für die Untergruppen zweiter Ordnung eingerichtet sein.

Gemäß einem zweiten Aspekt wird ein Computerprogrammprodukt vorgeschlagen, welches auf einer programmgesteuerten Einrichtung die Durchführung des wie oben erläuterten Verfahrens gemäß dem ersten Aspekt oder einer der Ausführungsformen des ersten Aspekts veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird eine Vorrichtung zum Übertrag-en von Daten in einem Topic-basierten Publish-Subscribe-System umfassend einen Schlüsselverteilserver und eine Anzahl von mit dem Schlüsselverteilserver koppelbaren lokalen Client-Systemen vorgeschlagen. Die Vorrichtung umfasst eine erste Einheit, eine zweite Einheit und eine dritte Einheit. Die erste Einheit ist zum Bereitstellen eines Gruppenschlüssels durch den Schlüsselverteilserver für eine Gruppe ausgewählt aus den lokalen Client-Systemen eingerichtet. Die zweite Einheit ist zum Ableiten eines Untergruppenschlüssels erster Ordnung für eine Untergruppe erster Ordnung der Gruppe mittels Schlüsselableitungsparametern zumindest umfassend den bereitgestellten Gruppenschlüssel und ein bestimmtes Topic des Publish-Subscribe-Systems durch das jeweilige Client-System der Untergruppe erster Ordnung eingerichtet. Die dritte Einheit ist zum Übertragen zumindest einer unter Verwendung des abgeleiteten Untergruppenschlüssels erster Ordnung kryptographisch geschützten Nachricht zwischen den Client-Systemen der Untergruppe erster Ordnung eingerichtet. Die Vorrichtung ist des weiteren eingerichtet zum lokalen Ableiten eines Untergruppenschlüssels zweiter Ordnung für eine Untergruppe zweiter Ordnung der Untergruppe erster Ordnung mittels des abgeleiteten Untergruppenschlüssels erster Ordnung durch das jeweilige Client-System der Untergruppe zweiter Ordnung, und Übertragen zumindest einer unter Verwendung des abgeleiteten Untergruppenschlüssels zweiter Ordnung kryptographisch geschützten Nachricht zwischen den Client-Systemen der Untergruppe zweiter Ordnung.

Die für das vorgeschlagene Verfahren beschriebenen Ausführungsformen und Merkmale gelten für die vorgeschlagene Vorrichtung entsprechend.

Die jeweilige Einheit, zum Beispiel die erste Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als integrierter Schaltkreis ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem vierten Aspekt wird ein Topic-basiertes Publish-Subscribe-System vorgeschlagen. Das Publish-Subscribe-System umfasst einen Schlüsselverteilserver, eine Anzahl von mit dem Schlüsselverteilserver koppelbaren lokalen Client-Systemen und zumindest eine Vorrichtung gemäß dem vierten Aspekt zum Übertragen von Daten in dem Topic-basierten Publish-Subscribe-System.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1    zeigt ein schematisches Ablaufdiagramm eines ersten Ausführungsbeispiels eines Verfahrens zum Übertragen von Daten in einem Topic-basierten Publish-Subscribe-System;

Fig. 2    zeigt ein schematisches Blockschaltbild eines Ausführungsbeispiels eines Publish-Subscribe-Systems;

Fig. 3    zeigt eine schematische Ansicht von verschiedenen Gruppen von lokalen Client-Systemen eines Publish-Subscribe-Systems;

Fig. 4    zeigt ein schematisches Ablaufdiagramm eines zweiten Ausführungsbeispiels eines Verfahrens zum Übertragen von Daten in einem Topic-basierten Publish-Subscribe-System;

Fig. 5    zeigt ein schematisches Ablaufdiagramm eines dritten Ausführungsbeispiels eines Verfahrens zum Übertragen von Daten in einem Topic-basierten Publish-Subscribe-System; und

Fig. 6    zeigt ein schematisches Blockschaltbild eines Ausführungsbeispiels einer Vorrichtung zum Übertragen von Daten in einem Topic-basierten Publish-Subscribe-System.

In den Figuren sind gleiche oder funktionsgleiche Elemente mit denselben Bezugszeichen versehen worden, sofern nichts anderes angegeben ist.

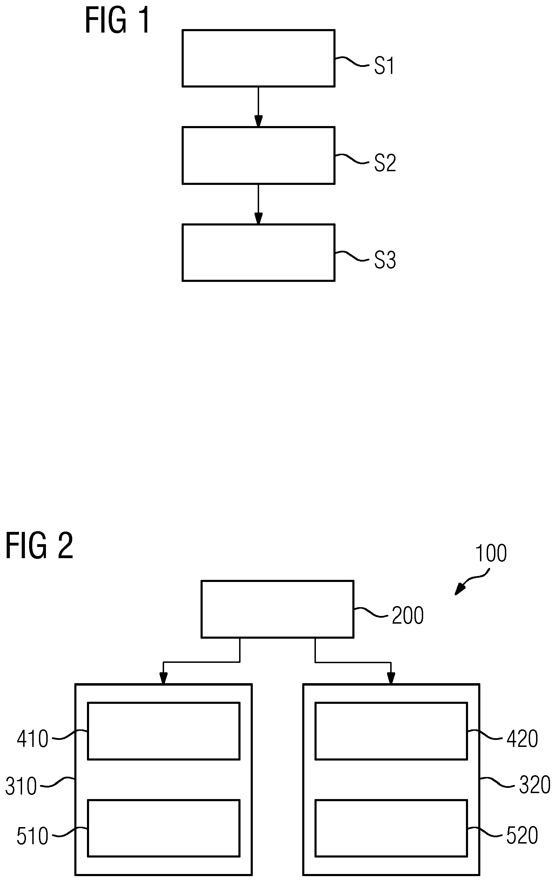

Fig. 1 zeigt ein schematisches Ablaufdiagramm eines ersten Ausführungsbeispiels eines Verfahrens zum Übertragen von Daten in einem Topic-basierten Publish-Subscribe-System 100.

Das Publish-Subscribe-System 100 umfasst einen Schlüsselverteilserver 200 und eine Anzahl von mit dem Schlüsselverteilserver 200 koppelbaren lokalen Client-Systemen 310, 320.

Hierzu zeigt die Fig. 2 ein schematisches Blockschaltbild eines Ausführungsbeispiels eines solchen Publish-Subscribe-Systems 100. Ohne Einschränkung der Allgemeinheit hat das Publish-Subscribe-System 100 der Fig. 2 zwei lokale Client-Systeme 310 und 320. Die Anzahl der Client-Systeme ist beliebig. Beispielsweise kann das Publish-Subscribe-System 100 einige Hundert oder einige Tausend Client-Systeme umfassen.

Das jeweilige Client-System 310, 320 der Fig. 2 umfasst eine jeweilige Client-Vorrichtung 410, 420 und eine jeweilige Schlüsselableitungseinheit 510, 520. Insbesondere ist die Schlüsselableitungseinheit 510, 520 in dem jeweiligen lokalen Client-System 310, 320 der jeweiligen Client-Vorrichtung 410, 420 vorgeordnet, das heißt zwischen der jeweiligen Client-Vorrichtung 410, 420 und dem Schlüsselverteilserver 200 angeordnet. Ein Vorteil dieser Anordnung der Schlüsselableitungseinheit 510, 520 vor der jeweiligen Client-Vorrichtung 410, 420 liegt darin, dass das jeweilige Client-System 310, 320 eine Mehrzahl von jeweiligen Client-Vorrichtungen aufweisen kann. In einem solchen Fall kann die jeweilige Schlüsselableitungseinheit 510, 520 für eine Mehrzahl von Client-Vorrichtungen des jeweiligen Client-Systems 310, 320 eingesetzt werden.

Das Verfahren der Fig. 1 umfasst die folgenden Schritte S1, S2 und S3:

In Schritt S1 wird ein Gruppenschlüssel durch den Schlüsselverteilserver 200 für eine Gruppe G ausgewählt aus den lokalen Client-Systemen 310, 320 bereitgestellt. Wie oben bereits ausgeführt, umfasst das Publish-Subscribe-System 200 beispielsweise eine Mehrzahl, beispielsweise einige Hundert oder Tausend von Client-Systemen. Entsprechend kann das Publish-Subscribe-System 100 eine Mehrzahl unterschiedlicher Gruppen G umfassen, wobei die jeweilige Gruppe G einem Topic des Publish-Subscribe-Systems 100 zugeordnet ist.

In Schritt S2 wird ein Untergruppenschlüssel erster Ordnung für eine Untergruppe erster Ordnung UG1 der Gruppe G mittels Schlüsselableitungsparametern zumindest umfassend den bereitgestellten Gruppenschlüssel und ein bestimmtes Topic des Publish-Subscribe-Systems 100 durch das jeweilige Client-System 310, 320 der Untergruppe erster Ordnung UG1 lokal abgeleitet. In einem einfachen Beispiel sind die Client-Systeme 310, 320 Teil einer Untergruppe erster Ordnung UG1 der Gruppe G. Die Gruppe G kann neben den Client-Systemen 310, 320 noch weitere, nicht näher dargestellte Client-Systeme umfassen.

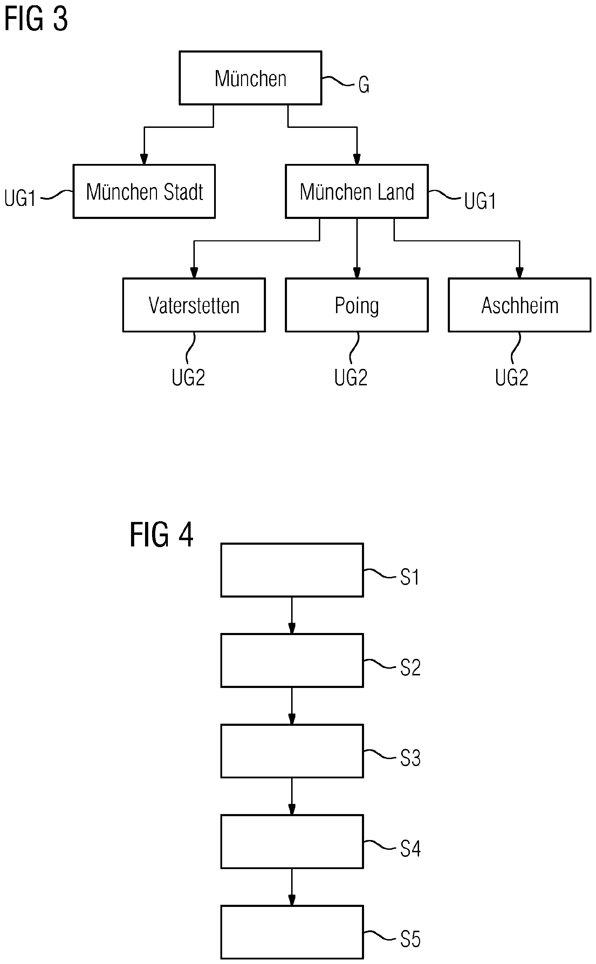

Zum besseren Verständnis der Gruppe G und der Untergruppe UG1 oder Untergruppen UG1 zeigt die Fig. 3 eine schematische Ansicht von verschiedenen Gruppen von lokalen Client-Systemen eines Publish-Subscribe-Systems 100. Beide in Fig. 3 dargestellte Untergruppen UG1 sind Teilmengen der Gruppe G von Client-Systemen. Insbesondere sind die linke Untergruppe erster Ordnung UG1 und die rechte Untergruppe erster Ordnung UG1 zwar Teilmengen der Gruppe G, im Allgemeinen aber keine disjunkten Teilmengen der Gruppe G.

Ferner zeigt die Fig. 3, dass die jeweilige Untergruppe erster Ordnung, wie in dem Beispiel der Fig. 3 die Untergruppe erster Ordnung UG1 auf der rechten Seite, weitere Untergruppen, dann sogenannte Untergruppen zweiter Ordnung UG2, aufweisen kann. Die drei in Fig. 3 dargestellten Untergruppen zweiter Ordnung UG2 der Untergruppe erster Ordnung UG1 entsprechen wiederum Teilmengen der Client-Systeme der Untergruppe erster Ordnung UG1. Die drei in Fig. 3 dargestellten Untergruppen zweiter Ordnung UG2 sind zwar Teilmengen der Untergruppe UG1, aber im Allgemeinen nicht disjunkte Teilmengen der Untergruppe erster Ordnung UG1.

Beispielsweise umfasst die Gruppe G alle Energieerzeugungseinrichtungen in München zur Erzeugung von elektrischer Energie in das örtliche Energieversorgungsnetzwerk. Beispiele für solche Energieerzeugungseinrichtungen umfassen Kraftwerke, aber auch lokale Energieerzeuger zur Lieferung von Solarstrom.

Wenn die Gruppe G alle Energieerzeugungseinrichtungen Münchens umfasst, so kann beispielsweise die linke Untergruppe erster Ordnung UG1 der Fig. 3 die Energieerzeugungseinrichtungen aus München-Stadt als Client-Systeme umfassen, wohingegen die rechte Untergruppe erster Ordnung UG1 der Fig. 3 die Energieerzeugungseinrichtungen von München-Land als Client-Systeme umfasst.

Eine jede der Untergruppen erster Ordnung UG1 kann wiederum mehrere Untergruppen zweiter Ordnung UG2 umfassen. In dem Beispiel der Fig. 3 umfasst die rechte Untergruppe erster Ordnung (München-Land) beispielhaft drei Untergruppen zweiter Ordnung UG2, zum Beispiel die Untergruppe zweiter Ordnung für die Energieerzeugungseinrichtungen in Vaterstetten (links), die Energieerzeugungseinrichtungen für Poing (Mitte) und die Energieerzeugungseinrichtungen für Aschheim (rechts). Diese Aufzählungen sind rein beispielhaft und nicht abschließend.

Ferner zeigt Fig. 4 ein schematisches Ablaufdiagramm eines zweiten Ausführungsbeispiels eines Verfahrens zum Übertragen von Daten in einem Topic-basierten Publish-Subscribe-System 100.

Das zweite Ausführungsbeispiel der Fig. 4 basiert auf dem ersten Ausführungsbeispiel der Fig. 1 und umfasst neben den mit Bezug zu Fig. 1 bereits erläuterten Schritten S1 - S3 die Schritte S4 und S5.

In Schritt S4 wird ein Untergruppenschlüssel zweiter Ordnung für eine Untergruppe zweiter Ordnung UG2 der Untergruppe erster Ordnung UG1 (siehe hierzu Fig. 3) mittels des abgeleiteten Untergruppenschlüssels erster Ordnung durch das jeweilige Client-System der Untergruppe zweiter Gruppe UG2 abgeleitet. Hierzu zeigt die Fig. 3 drei unterschiedliche Untergruppen zweiter Ordnung UG2, wobei die jeweilige Untergruppe zweiter Ordnung UG2 der Fig. 3 eine Teilmenge von Client-Systemen der rechts in Fig. 3 dargestellten Untergruppe erster Ordnung UG1 umfasst.

In Schritt S5 wird zumindest eine unter Verwendung des abgeleiteten Untergruppenschlüssels zweiter Ordnung kryptographisch geschützte Nachricht zwischen den Client-Systemen der Untergruppe zweiter Ordnung UG2 übertragen.

Insbesondere wird der Untergruppenschlüssel erster Ordnung für die Untergruppe erster Ordnung UG1 mittels der Schlüsselableitungsparameter umfassend den bereitgestellten Gruppenschlüssel, das bestimmte Topic des Publish-Subscribe-Systems 100, ein für die Untergruppe erster Ordnung UG1 spezifisches Geheimnis und zumindest einen weiteren Ableitungsparameter abgeleitet.

Der weitere Ableitungsparameter ist insbesondere ein Publish-Subscribe-System-basierter Parameter. Der Publish-Subscribe-System-basierte Parameter ist beispielsweise für eine Kommunikationsrichtung innerhalb des Publish-Subscribe-Systems 100, eine Schlüsselverwendung innerhalb des Publish-Subscribe-System 100 oder für einen Gültigkeiszeitraum für den Unergruppenschlüssel erster Ordnung indikativ. Insbesondere wird der Untergruppenschlüssel erster Ordnung für die Untergruppe erster Ordnung UG1 mittels einer kommutativen Operation aus den Schlüsselableitungsparametern durch das jeweilige Client-System der Untergruppe erster Ordnung UG1 abgeleitet.

Wie Fig. 3 zeigt, sind die Untergruppen UG1 und UG2 in einer Hierarchie angeordnet. Wenn N die Hierarchiestufe in der Hierarchie der Gruppen bedeutet, so ergibt sich für das Beispiel der Fig. 3:

N = 0: Gruppe G, oberste Hierarchiestufe
N = 1: Untergruppe erster Ordnung UG1, zweite Hierarchiestufe
N = 2: Untergruppe zweiter Ordnung UG2, unterste Hierarchiestufe

Für die Ableitung der Untergruppenschlüssel kann demnach allgemein formuliert werden, dass ein Untergruppenschlüssel (N+1)-ter Ordnung einer Untergruppe (N+1)-ter Ordnung mittels eines Untergruppenschlüssels N-ter Ordnung einer Untergruppe N-ter Ordnung abgeleitet wird. Für das Beispiel der Untergruppe zweiter Ordnung UG2 wird der Untergruppenschlüssel zweiter Ordnung mittels des Untergruppenschlüssels erster Ordnung der Untergruppe erster Ordnung UG1 abgeleitet. Dabei ist die Untergruppe N-ter Ordnung in der Hierarchie unmittelbar über der Untergruppe (N+1)-ter Ordnung angeordnet.

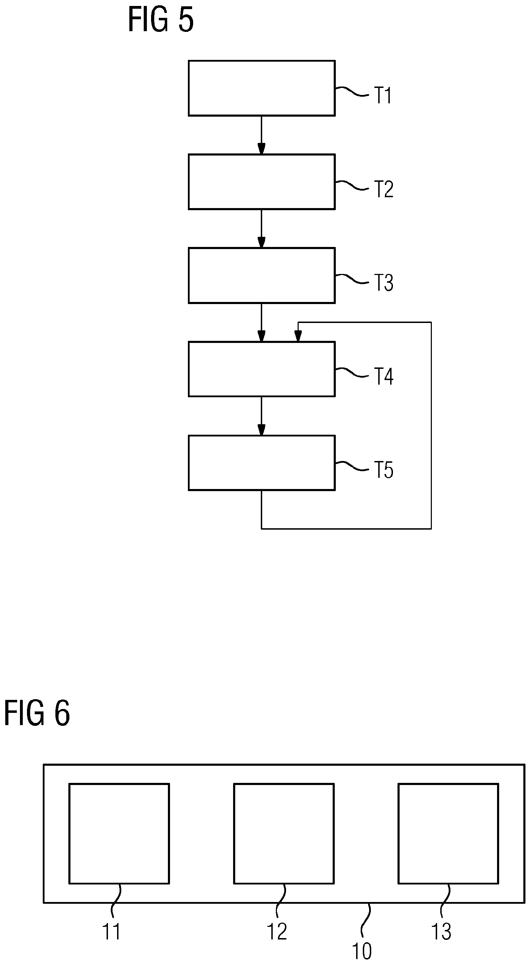

Fig. 5 zeigt ein schematisches Ablaufdiagramm eines dritten Ausführungsbeispiels eines Verfahrens zum Übertragen von Daten in einem Topic-basierten Publish-Subscribe-System 100.

Das dritte Ausführungsbeispiel der Fig. 5 umfasst die Schritte T1 - T5:
Die Schritte T1 - T3 entsprechen den mit Bezug zu Fig. 1 bereits erläuterten Schritten S1 - S3.

In Schritt T4 wird ein Untergruppenschlüssel (N+1)-ter Ordnung für eine Untergruppe (N+1)-ter Ordnung der Untergruppe N-ter Ordnung mittels des abgeleiteten Untergruppenschlüssels N-ter Ordnung durch das jeweilige Client-System der Untergruppe (N+1)-ter Ordnung abgeleitet, mit $N \in [1, ..., M]$ und $M > 2$.

In Schritt T5 wird zumindest eine unter Verwendung des abgeleiteten Untergruppenschlüssels (N+1)-ter Ordnung kryptographisch geschützte Nachricht zwischen den Client-Systemen der Untergruppe (N+1)-ter Ordnung übertragen.

Vorzugsweise werden die Schritte T4 und T5 iterativ für eine jede der M Untergruppen durchgeführt.

Insbesondere wird der Untergruppenschlüssel (N+1)-ter Ordnung für die Untergruppe (N+1)-ter Ordnung unter Verwendung des abgeleiteten Untergruppenschlüssels N-ter Ordnung und eines für die Untergruppe (N+1)-ter Ordnung spezifischen Geheimnisses durch das jeweilige Client-System der Untergruppe (N+1)-ter Ordnung abgeleitet.

In Fig. 6 ist ein schematisches Blockschaltbild eines Ausführungsbeispiels einer Vorrichtung 10 zum Übertragen von Daten in einem Topic-basierten Publish-Subscribe-System 100 dargestellt.

Das Publish-Subscribe-System 100 umfasst zumindest einen Schlüsselverteilserver 200 und eine Anzahl von mit dem Schlüsselverteilserver 200 koppelbaren lokalen Client-Systemen 310, 320. Ein Beispiel für ein solches Publish-Subscribe-System 100 ist in Fig. 2 dargestellt.

Die Vorrichtung 10 umfasst eine erste Einheit 11, eine zweite Einheit 12 und eine dritte Einheit 13.

Die erste Einheit 11 ist dazu eingerichtet, einen Gruppenschlüssel durch den Schlüsselverteilserver 200 für eine Gruppe G ausgewählt aus den lokalen Client-Systemen 310, 320 bereitzustellen.

Die zweite Einheit 12 ist dazu eingerichtet, einen Untergruppenschlüssel erster Ordnung für eine Untergruppe erster Ordnung UG1 der Gruppe G mittels Schlüsselableitungsparametern zumindest umfassend den bereitgestellten Gruppenschlüssel und einen bestimmten Topic des Publish-Subscribe-Systems 100 für das jeweilige Client-System 310, 320 der Untergruppe erster Ordnung UG1 abzuleiten.

Die erste Einheit 11 ist dem Schlüsselverteilserver 200 zugeordnet, wohingegen die zweite Einheit 12 lokal dem Client-System 310, 320 zugeordnet ist. Entsprechend der Anzahl der Client-Systeme 310, 320 der Untergruppe erster Ordnung UG1 sind entsprechend viele zweite Einheiten 12 vorgesehen.

Die dritte Einheit 13 ist dazu eingerichtet, zumindest eine unter Verwendung des abgeleiteten Untergruppenschlüssels erster Ordnung kryptographisch geschützte Nachricht zwischen den Client-Systemen 310, 320 der Untergruppe erster Ordnung UG1 zu übertragen.

Obwohl die vorliegende Erfindung anhand von Ausführungsbeispielen beschrieben wurde, ist sie vielfältig modifizierbar. Die Erfindung wird durch die beigefügten Ansprüche bestimmt.

**Patentansprüche**

1. Verfahren zum Übertragen von Daten in einem Topic-basierten Publish-Subscribe-System (100) umfassend einen Schlüsselverteilserver (200) und eine Anzahl von mit dem Schlüsselverteilserver (200) koppelbaren lokalen Client-Systemen (310, 320), mit:

   a) Bereitstellen (S1, T1) eines Gruppenschlüssels durch den Schlüsselverteilserver (200) für eine Gruppe (G) ausgewählt aus den lokalen Client-Systemen (310, 320),
   b) lokales Ableiten (S2, T2) eines Untergruppenschlüssels erster Ordnung für eine Untergruppe erster Ordnung (UG1) der Gruppe (G) mittels Schlüsselableitungsparametern zumindest umfassend den bereitgestellten Gruppenschlüssel und ein bestimmtes Topic des Publish-Subscribe-Systems (100) durch das jeweilige Client-System (310, 320) der Untergruppe erster Ordnung (UG1), und
   c) Übertragen (S3, T3) zumindest einer unter Verwendung des abgeleiteten Untergruppenschlüssels erster Ordnung kryptographisch geschützten Nachricht zwischen den Client-Systemen (310, 320) der Untergruppe erster Ordnung (UG1),

   wobei das Verfahren weiterhin beinhaltet:

   lokales Ableiten (S4) eines Untergruppenschlüssels zweiter Ordnung für eine Untergruppe zweiter Ordnung (UG2) der Untergruppe erster Ordnung (UG1) mittels des abgeleiteten Untergruppenschlüssels erster Ordnung durch das jeweilige Client-System der Untergruppe zweiter Ordnung (UG2), und
   Übertragen (S5) zumindest einer unter Verwendung des abgeleiteten Untergruppenschlüssels zweiter Ordnung kryptographisch geschützten Nachricht zwischen den Client-Systemen der Untergruppe zweiter Ordnung (UG2).

2. Verfahren nach Anspruch 1, wobei die Schritte a), b) und c) nach einer jeweiligen Authentisierung des Client-Systems (310, 320) der Gruppe (G) an dem Schlüsselverteilserver (200) durchgeführt werden.

3. Verfahren nach einem der Ansprüche 1 oder 2, wobei der Untergruppenschlüssel erster Ordnung für die Untergruppe erster Ordnung (UG1) mittels der Schlüsselableitungsparameter umfassend den bereitgestellten Gruppenschlüssel, das bestimmte Topic des Publish-Subscribe-Systems (100), ein für die Untergruppe erster Ordnung (UG1) spezifisches Geheimnis und zumindest einen weiteren Ableitungsparameter abgeleitet wird.

4. Verfahren nach Anspruch 3, wobei der weitere Ableitungsparameter ein Publish-Subscribe-System-basierter Parameter ist, welcher insbesondere für eine Kommunikationsrichtung innerhalb des Publish-Subscribe-Systems (100), eine Schlüsselverwendung innerhalb des Publish-Subscribe-Systems (100) und/oder einen Gültigkeitszeitraum für den Untergruppenschlüssel erster Ordnung indikativ ist.

5. Verfahren nach einem der Ansprüche 1 bis 4, wobei der Untergruppenschlüssel erster Ordnung (UG1) für die Untergruppe erster Ordnung mittels einer kommutativen Operation aus den Schlüsselableitungsparametern durch das jeweilige Client-System (310, 320) der Untergruppe erster Ordnung (UG1) abgeleitet wird.

6. Verfahren nach einem der Ansprüche 1 bis 5, wobei M in einer Hierarchie geordnete Untergruppen (UG1, UG2) der Gruppe (G) von Client-Systemen (310, 320) vorgesehen werden, wobei ein Untergruppenschlüssel (N+1)-ter Ordnung einer Untergruppe (N+1)-ter Ordnung mittels eines Untergruppenschlüssels N-ter Ordnung einer Untergruppe N-ter Ordnung abgeleitet wird.

7. Verfahren nach Anspruch 6, wobei die Untergruppe N-ter Ordnung in der Hierarchie der M geordneten Untergruppen unmittelbar über der Untergruppe (N+1)-ter Ordnung angeordnet ist.

8. Verfahren nach einem der Ansprüche 1 bis 7, weiterhin enthaltend ein

    lokales Ableiten (T4) eines Untergruppenschlüssels (N+1)-ter Ordnung für eine Untergruppe (N+1)-ter Ordnung der Untergruppe N-ter Ordnung mittels des abgeleiteten Untergruppenschlüssels N-ter Ordnung durch das jeweilige Client-System der Untergruppe (N+1)-ter Ordnung, mit $N \in [1, ..., M]$ und $M > 2$, und
    Übertragen (T5) zumindest einer unter Verwendung des abgeleiteten Untergruppenschlüssels (N+1)-ter Ordnung kryptographisch geschützten Nachricht zwischen den Client-Systemen der Untergruppe (N+1)-ter Ordnung.

9. Verfahren nach Anspruch 8, wobei der Untergruppenschlüssel (N+1)-ter Ordnung für die Untergruppe (N+1)-ter Ordnung unter Verwendung des abgeleiteten Untergruppenschlüssels N-ter Ordnung und eines für die Untergruppe (N+1)-ter Ordnung spezifischen Geheimnisses durch das jeweilige Client-System der Untergruppe (N+1)-ter Ordnung abgeleitet wird.

10. Verfahren nach einem der Ansprüche 1 bis 9, wobei das lokale Client-System (310, 320) eine Anzahl von Client-Vorrichtungen (410, 420) umfasst, wobei die Client-Vorrichtung (410, 420) insbesondere eine dezentrale Energieerzeugungseinrichtung zur Bereitstellung von elektrischer Energie in ein Energieversorgungsnetzwerk umfasst.

11. Verfahren nach Anspruch 10, wobei das lokale Client-System (310, 320) eine Schlüsselableitungseinheit (510, 520) aufweist, mittels welcher der Untergruppenschlüssel für die Client-Vorrichtungen (410, 420) des lokalen Client-Systems (310, 320) abgeleitet wird.

12. Verfahren nach Anspruch 11, wobei das Client-System (310, 320) einer bestimmten Untergruppe (UG1, UG2) von M in einer Hierarchie geordneten Untergruppen (UG1, UG2) für die Gruppe (G) von Client-Systemen (310, 320) zugeordnet wird, wobei der der bestimmten Untergruppe (UG1, UG2) zugeordnete Untergruppenschlüssel für die Client-Vorrichtungen (410, 420) des Client-Systems (310, 320) mittels der Schlüsselableitungseinheit (510, 520) des Client-Systems (310, 320) abgeleitet wird.

13. Vorrichtung (10) zum Übertragen von Daten in einem Topic-basierten Publish-Subscribe-System (100) umfassend einen Schlüsselverteilserver (200) und eine Anzahl von mit dem Schlüsselverteilserver (200) koppelbaren lokalen Client-Systemen (310, 320), mit:

einer ersten Einheit (11) zum Bereitstellen eines Gruppenschlüssels durch den Schlüsselverteilserver (200) für eine Gruppe (G) ausgewählt aus den lokalen Client-Systemen (310, 320),

einer zweiten Einheit (12) zum lokalen Ableiten eines Untergruppenschlüssels erster Ordnung für eine Untergruppe erster Ordnung (UG1) der Gruppe (G) mittels Schlüsselableitungsparametern zumindest umfassend den bereitgestellten Gruppenschlüssel und ein bestimmtes Topic des Publish-Subscribe-Systems (100) für das jeweilige Client-System (310, 320) der Untergruppe erster Ordnung (UG1), und

einer dritten Einheit (13) zum Übertragen zumindest einer unter Verwendung des abgeleiteten Untergruppenschlüssels erster Ordnung kryptographisch geschützten Nachricht zwischen den Client-Systemen (310, 320) der Untergruppe erster Ordnung (UG1), wobei die Vorrichtung weiterhin eingerichtet ist zum lokalen Ableiten (S4) eines Untergruppenschlüssels zweiter Ordnung für eine Untergruppe zweiter Ordnung (UG2) der Untergruppe erster Ordnung (UG1) mittels des abgeleiteten Untergruppenschlüssels erster Ordnung durch das jeweilige Client-System der Untergruppe zweiter Ordnung (UG2), und

Übertragen (S5) zumindest einer unter Verwendung des abgeleiteten Untergruppenschlüssels zweiter Ordnung kryptographisch geschützten Nachricht zwischen den Client-Systemen der Untergruppe zweiter Ordnung (UG2).

14. Publish-Subscribe-System (100) mit einem Schlüsselverteilserver (200), einer Anzahl von mit dem Schlüsselverteilserver (200) koppelbaren lokalen Client-Systemen (310, 320) und zumindest einer Vorrichtung (10) zum Übertragen von Daten in dem Topic-basierten Publish-Subscribe-System (100) nach Anspruch 13.

**Claims**

1. Method for transferring data in a topic-based publish-subscribe system (100), comprising a key distribution server (200) and a number of local client systems (310, 320) that can be coupled with the key distribution server (200), comprising:

   a) providing (S1, T1) a group key by the key distribution server (200) for a group (G) selected from the local client systems (310, 320),

   b) locally deriving (S2, T2) a first-order sub-group key for a first-order sub-group (UG1) of the group (G) by means of key derivation parameters, at least comprising the provided group key and a specific topic of the publish-subscribe system (100), by the respective client system (310, 320) of the first-order sub-group (UG1), and

   c) transferring (S3, T3) at least one message cryptographically protected by means of the derived first-order sub-group key between the client systems (310, 320) of the first-order sub-group (UG1),

   wherein the method also comprises:

   locally deriving (S4) a second-order sub-group key for a second-order sub-group (UG2) of the first-order sub-group (UG1) by means of the derived first-order sub-group key by the respective client system of the second-order sub-group (UG2), and

   transferring (S5) at least one message cryptographically protected by means of the derived second-order sub-group key between the client systems of the second-order sub-group (UG2) .

2. Method according to Claim 1,
   wherein
   the steps a), b) and c) are carried out after a respective authentication of the client system (310, 320) of the group (G) on the key distribution server (200).

3. Method according to either one of Claims 1 and 2,
   wherein
   the first-order sub-group key for the first-order sub-group (UG1) is derived by means of the key derivation parameters comprising the supplied group key, the specific topic of the publish-subscribe system (100), a secret specific to the first-order sub-group (UG1) and at least one additional derivation parameter.

4. Method according to Claim 3,
   wherein
   the additional derivation parameter is a publish-subscribe-system-based parameter, which is indicative, in particular, of a communication direction within the publish-subscribe system (100), a key usage within the publish-subscribe system (100) and/or a validity period of the first-order sub-group key.

**5.** Method according to any one of Claims 1 to 4,
wherein
the first-order sub-group key (UG1) for the first-order sub-group is derived by means of a commutative operation from the key derivation parameters by the respective client system (310, 320) of the first-order sub-group (UG1).

**6.** Method according to any one of Claims 1 to 5,
wherein
M sub-groups (UG1, UG2) ranked in a hierarchy of the group (G) of client systems (310, 320) are provided, wherein a sub-group key of (N+1)-th order of a sub-group of (N+1)-th order is derived by means of an Nth order sub-group key of an Nth order sub-group.

**7.** Method according to Claim 6,
wherein
the Nth order sub-group in the hierarchy of the M ranked sub-groups is arranged directly above the sub-group of (N+1)-th order.

**8.** Method according to any one of Claims 1 to 7,
also comprising

locally deriving (T4) a sub-group key of (N+1)-th order for a sub-group of (N+1)-th order of the Nth order sub-group by means of the derived Nth order sub-group key by the respective client system of the sub-group of (N+1)-th order, with $N \in [1, ..., M]$ and $M > 2$, and
transferring (T5) at least one message cryptographically protected by means of the derived sub-group key of (N+1)-th order between the client systems of the sub-group of (N+1)-th order.

**9.** Method according to Claim 8,
wherein
the sub-group key of (N+1)-th order for the sub-group of (N+1)-th order is derived by means of the derived Nth order sub-group key and a secret specific to the sub-group of (N+1)-th order by the respective client system of the sub-group of (N+1)-th order.

**10.** Method according to any one of Claims 1 to 9,
wherein
the local client system (310, 320) comprises a number of client devices (410, 420), wherein the client device (410, 420) comprises, in particular, a decentralized power generation facility for the supply of electrical power into a power supply network.

**11.** Method according to Claim 10,
wherein
the local client system (310, 320) has a key derivation unit (510, 520), by means of which the sub-group key for the client devices (410, 420) of the local client system (310, 320) is derived.

**12.** Method according to Claim 11,
wherein
the client system (310, 320) is allocated to a particular sub-group (UG1, UG2) of M sub-groups (UG1, UG2) ranked in a hierarchy for the group (G) of client systems (310, 320), wherein the sub-group key for the client devices (410, 420) of the client system (310, 320) allocated to the particular sub-group (UG1, UG2) is derived by means of the key derivation unit (510, 520) of the client system (310, 320).

**13.** Device (10) for transferring data in a topic-based publish-subscribe system (100), comprising a key distribution server (200) and a number of local client systems (310, 320) that can be coupled with the key distribution server (200), comprising:

a first unit (11) for providing a group key by the key distribution server (200) for a group (G) selected from the local client systems (310, 320),
a second unit (12) for locally deriving a first-order sub-group key for a first-order sub-group (UG1) of the group (G) by means of key derivation parameters, at least comprising the provided group key and a specific topic of the publish-subscribe system (100) for the respective client system (310, 320) of the first-order sub-group (UG1), and

a third unit (13) for transferring at least one message cryptographically protected by means of the derived first-order sub-group key between the client systems (310, 320) of the first-order sub-group (UG1), wherein the device is also configured to

locally derive (S4) a second-order sub-group key for a second-order sub-group (UG2) of the first-order sub-group (UG1) by means of the derived first-order sub-group key by the respective client system of the second-order sub-group (UG2), and

transfer (S5) at least one message cryptographically protected by means of the derived second-order sub-group key between the client systems of the second-order sub-group (UG2) .

**14.** Publish-subscribe system (100) having a key distribution server (200), a number of local client systems (310, 320) that can be coupled with the key distribution server (200) and at least one device (10) for transferring data in the topic-based publish-subscribe system (100) according to Claim 13.

## Revendications

**1.** Procédé destiné à la transmission de données dans un système de publication-abonnement basé sur des sujets (100) comprenant un serveur de distribution de clés (200) et un nombre de systèmes clients locaux (310, 320) pouvant être couplés au serveur de distribution de clés (200), avec :

a) la mise à disposition (S1, T1) d'une clé de groupe sélectionnée pour un groupe (G) à partir des systèmes clients locaux (310, 320) par le biais du serveur de distribution de clés (200),

b) la dérivation locale (S2, T2) d'une clé de sous-groupe de premier ordre pour un sous-groupe de premier ordre (UG1) du groupe (G) au moyen de paramètres de dérivation de clés comprenant au moins la clé de groupe mise à disposition et un sujet défini du système de publication-abonnement (100) par le biais du système client (310, 320) respectif du sous-groupe de premier ordre (UG1), et

c) la transmission (S3, T3) d'au moins un message protégé de manière cryptographique en utilisant la clé de sous-groupe dérivée de premier ordre entre les systèmes clients (310, 320) du sous-groupe de premier ordre (UG1),

dans lequel le procédé contient en outre :

la dérivation locale (S4) d'une clé de sous-groupe de deuxième ordre pour un sous-groupe de deuxième ordre (UG2) du sous-groupe de premier ordre (UG1) au moyen de la clé de sous-groupe dérivée de premier ordre par le biais du système client respectif du sous-groupe de deuxième ordre (UG2), et

la transmission (S5) d'au moins un message protégé de manière cryptographique en utilisant la clé de sous-groupe dérivée de deuxième ordre entre les systèmes clients du sous-groupe de deuxième ordre (UG2).

**2.** Procédé selon la revendication 1,
dans lequel les étapes a), b) et c) sont exécutées après une authentification respective du système client (310, 320) du groupe (G) au niveau du serveur de distribution de clés (200).

**3.** Procédé selon l'une quelconque des revendications 1 ou 2, dans lequel la clé de sous-groupe de premier ordre est dérivée pour le sous-groupe de premier ordre (UG1) au moyen des paramètres de dérivation de clés comprenant la clé de groupe mise à disposition, le sujet défini du système de publication-abonnement (100), un secret spécifique au sous-groupe de premier ordre (UG1) et au moins un autre paramètre de dérivation.

**4.** Procédé selon la revendication 3,
dans lequel l'autre paramètre de dérivation est un paramètre basé sur un système de publication-abonnement, lequel en particulier pour une direction de communication au sein du système de publication-abonnement (100) est indicatif d'une utilisation de clés au sein du système de publication-abonnement (100) et/ou d'une durée de validité pour la clé de sous-groupe de premier ordre.

**5.** Procédé selon l'une quelconque des revendications 1 à 4, dans lequel la clé de sous-groupe de premier ordre (UG1) est dérivée pour le sous-groupe de premier ordre au moyen d'une opération de commutation à partir des paramètres de dérivation de clés par le biais du système client (310, 320) respectif du sous-groupe de premier ordre (UG1).

**6.** Procédé selon l'une quelconque des revendications 1 à 5, dans lequel M groupes ordonnés selon une hiérarchie (UG1, UG2) du groupe (G) de systèmes clients (310, 320) sont prévus, dans lequel une clé de sous-groupe de (N + 1)ième ordre d'un sous-groupe de (N + 1)ième ordre est dérivée au moyen d'une clé de sous-groupe de Nième ordre d'un sous-groupe de Nième ordre.

**7.** Procédé selon la revendication 6,
dans lequel le sous-groupe de Nième ordre selon la hiérarchie des M sous-groupes ordonnés est disposé directement au-dessus du sous-groupe de (N + 1)ième ordre.

**8.** Procédé selon l'une quelconque des revendications 1 à 7, contenant en outre une dérivation locale (T4) d'une clé de sous-groupe de (N + 1)ième ordre pour un sous-groupe de (N + 1)ième ordre du sous-groupe de Nième ordre au moyen de la clé de sous-groupe dérivée de Nième ordre par le biais du système client respectif du sous-groupe de (N + 1)ième ordre, avec N ∈ [1, ..., M] et M > 2, et
une transmission (T5) d'au moins un message protégé de manière cryptographique en utilisant la clé de sous-groupe dérivée de (N + 1)ième ordre entre les systèmes clients du sous-groupe de (N + 1)ième ordre.

**9.** Procédé selon la revendication 8,
dans lequel la clé de sous-groupe de (N + 1)ième ordre pour le sous-groupe de (N + 1) ième ordre est dérivée en utilisant la clé de sous-groupe dérivée de Nième ordre et un secret spécifique au sous-groupe de (N + 1)ième ordre par le biais du système client respectif du sous-groupe de (N + 1) ième ordre.

**10.** Procédé selon l'une quelconque des revendications 1 à 9, dans lequel le système client local (310, 320) comprend un nombre de dispositifs clients (410, 420), dans lequel le dispositif client (410, 420) comprend en particulier un dispositif de production d'énergie décentralisé destiné à la mise à disposition d'énergie électrique dans un réseau d'alimentation en énergie.

**11.** Procédé selon la revendication 10,
dans lequel le système client local (310, 320) présente une unité de dérivation de clés (510, 520) au moyen de laquelle la clé de sous-groupe pour les dispositifs clients (410, 420) du système client local (310, 320) est dérivée.

**12.** Procédé selon la revendication 11,
dans lequel le système client (310, 320) est associé à un sous-groupe (UG1, UG2) déterminé de M sous-groupes (UG1, UG2) ordonnés selon une hiérarchie pour le groupe (G) de systèmes clients (310, 320), dans lequel la clé de sous-groupe associée au sous-groupe (UG1, UG2) déterminé est dérivée pour les dispositifs clients (410, 420) du système client (310, 320) au moyen de l'unité de dérivation de clés (510, 520) du système client (310, 320).

**13.** Dispositif (10) destiné à la transmission de données dans un système de publication-abonnement basé sur des sujets (100) comprenant un serveur de distribution de clés (200) et un nombre de systèmes clients locaux (310, 320) pouvant être couplés au serveur de distribution de clés (200), avec :

une première unité (11) destinée à la mise à disposition d'une clé de groupe sélectionnée pour un groupe (G) par le biais du serveur de distribution de clés (200) à partir des systèmes clients locaux (310, 320),
une deuxième unité (12) destinée à la dérivation locale d'une clé de sous-groupe de premier ordre pour un sous-groupe de premier ordre (UG1) du groupe (G) au moyen de paramètres de dérivation de clés comprenant au moins la clé de groupe mise à disposition et un sujet défini du système de publication-abonnement (100) pour le système client (310, 320) respectif du sous-groupe de premier ordre (UG1), et
une troisième unité (13) destinée à la transmission d'au moins un message protégé de manière cryptographique en utilisant la clé de sous-groupe dérivée entre les systèmes clients (310, 320) du sous-groupe de premier ordre (UG1), dans lequel le dispositif est en outre conçu pour la dérivation locale (S4) d'une clé de sous-groupe de deuxième ordre pour un sous-groupe de deuxième ordre (UG2) du sous-groupe de premier ordre (UG1) au moyen de la clé de sous-groupe dérivée de premier ordre par le biais du système client respectif du sous-groupe de deuxième ordre (UG2), et la transmission (S5) d'au moins un message protégé de manière cryptographique en utilisant la clé de sous-groupe dérivée de deuxième ordre entre les systèmes clients du sous-groupe de deuxième ordre (UG2).

**14.** Système de publication-abonnement (100) avec un serveur de distribution de clés (200), un nombre de systèmes clients locaux (310, 320) pouvant être couplés au serveur de distribution de clés (200) et au moins un dispositif (10) destiné à la transmission de données dans le système de publication-abonnement basé sur des sujets (100) selon

la revendication 13.

FIG 1

S1

S2

S3

FIG 2

100

200

410

310

510

420

320

520

# FIG 3

```
                    ┌──────────────┐
                    │   München    │──── G
                    └──────────────┘
                      │          │
                      ▼          ▼
  ┌──────────────┐          ┌──────────────┐
UG1│ München Stadt│          │ München Land │──── UG1
  └──────────────┘          └──────────────┘
                        │       │        │
                        ▼       ▼        ▼
           ┌───────────┐ ┌───────────┐ ┌───────────┐
           │Vaterstetten│ │   Poing   │ │ Aschheim  │
           └───────────┘ └───────────┘ └───────────┘
                 │             │             │
               UG2           UG2           UG2
```

# FIG 4

```
        ┌──────────────┐
        │              │──── S1
        └──────────────┘
                │
                ▼
        ┌──────────────┐
        │              │──── S2
        └──────────────┘
                │
                ▼
        ┌──────────────┐
        │              │──── S3
        └──────────────┘
                │
                ▼
        ┌──────────────┐
        │              │──── S4
        └──────────────┘
                │
                ▼
        ┌──────────────┐
        │              │──── S5
        └──────────────┘
```

## FIG 5

```
┌──────────────┐
│              │ ⌇ T1
└──────┬───────┘
       │
       ▼
┌──────────────┐
│              │ ⌇ T2
└──────┬───────┘
       │
       ▼
┌──────────────┐
│              │ ⌇ T3
└──────┬───────┘
       │
       ▼
┌──────────────┐
│              │ ⌇ T4
└──────┬───────┘
       │
       ▼
┌──────────────┐
│              │ ⌇ T5
└──────────────┘
```

## FIG 6

```
┌─────────────────────────────────────────┐
│  ┌───────┐     ┌───────┐     ┌───────┐   │
│  │       │     │       │     │       │   │
│  │       │     │       │     │       │   │
│  └───┬───┘     └───┬───┘     └───┬───┘   │
└──────┼─────────────┼─────────────┼───────┘
       ⌇             ⌇     ⌇       ⌇
      11            12    10      13
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7234058 B1
- US 6363154 B1

- WO 2007149850 A2